# EUROPEAN PATENT APPLICATION

(11) **EP 3 916 659 A1**
(43) Date of publication of application: **01.12.2021**
(21) Application number: 20745991.8
(22) Date of filing: 21.01.2020
(51) Int. Cl.: G06Q 10/10

(54) **INFORMATION PROCESSING DEVICE, INFORMATION PROCESSING METHOD, AND PROGRAM**

(30) Priority: 21.01.2019 JP 2019007679
(71) Applicant: Acall, Inc., Chuo-ku Kobe City, Hyogo 650-0033 (JP)
(72) Inventor: NAGANUMA Yoshihisa, Kobe City, Hyogo 650-0033 (JP)
(74) Representative: Ström & Gulliksson AB
(86) International application number: PCT/JP2020/001870
(87) International publication number: WO 2020/153336

(57) **Abstract**

The present invention provides a matching service which enables "a field", in which the assurance of security, moral compliance, and maintenance of a management system are implemented, to always be easily utilized. In an information processing system for assisting users U1 to Un who use the field and owners O1 to Om who provide the field, a selection unit 114 of a server 1 selects one or more fields that satisfy a prescribed condition from among one or more fields on the basis of pieces of user information about the respective users U1 to Un and field information about fields P1 to Pm provided by the respective owners O1 to Om, and thereby, the problem is resolved.

## Description

### TECHNICAL FIELD

The present invention relates to an information processing device, an information processing method, and a program.

### BACKGROUND ART

With the diversification of work styles in recent years, more and more persons work and have meetings in various places, such as satellite offices, their homes, coworking spaces, cafes, etc. There are some techniques for assisting such persons (see, for example, Patent Document 1).

Patent Document 1: Japanese Unexamined Patent Application, Publication No. 2015-129983

### DISCLOSURE OF THE INVENTION

### Problems to be Solved by the Invention

However, although there has recently been an increasing demand for a technique that enables a person to perform an activity in an appropriate place as occasion may demand, the conventional techniques including the technique of Patent Document 1 cannot adequately meet the demand.

### Means for Solving the Problems

To address the above described problems, an information processing device according to an aspect of the present invention includes: a selection portion that selects, based on first information regarding each of n persons (where n is an integer equal to or greater than 1) and second information regarding m places (where m is an integer equal to or greater than 1), N persons (where N is an integer equal to or smaller than n) from the n persons, and M places (where M is an integer equal to or smaller than m, and independent from N) that are available to at least one of the N persons.

### Effects of the Invention

According to the present invention, the user can perform an activity in an appropriate place as occasion may demand.

### BRIEF DESCRIPTION OF THE DRAWINGS

FIG. 1 is an image diagram illustrating an outline of a service that can be implemented by an information processing system to which an information processing device according to the present invention is applied;
FIG. 2 is an image diagram illustrating an outline of a service that can be implemented by an information processing system to which the information processing device according to the present invention is applied;
FIG. 3 is a diagram illustrating a configuration of an information processing system to which a server according to an embodiment of the information processing device of the present invention is applied;
FIG. 4 is a block diagram illustrating, as an example, a hardware configuration of the server included in the information processing system of FIG. 3;
FIG. 5 is a functional block diagram illustrating, as an example, a functional configuration that is included in functional configurations of the server of FIG. 4, and that enables matching processing and place management processing;
FIG. 6 is a diagram illustrating a specific example of a GUI displayed on a user terminal included in the information processing system of FIG. 3;
FIG. 7 is a diagram illustrating a specific example of the GUI displayed on the user terminal included in the information processing system of FIG. 3;
FIG. 8 is a diagram illustrating a specific example of the GUI displayed on the user terminal included in the information processing system of FIG. 3;
FIG. 9 is an image diagram illustrating an outline of "Workstyle OS"; and
FIG. 10 is an image diagram illustrating an outline of a feedback loop.

### PREFERRED MODE FOR CARRYING OUT THE INVENTION

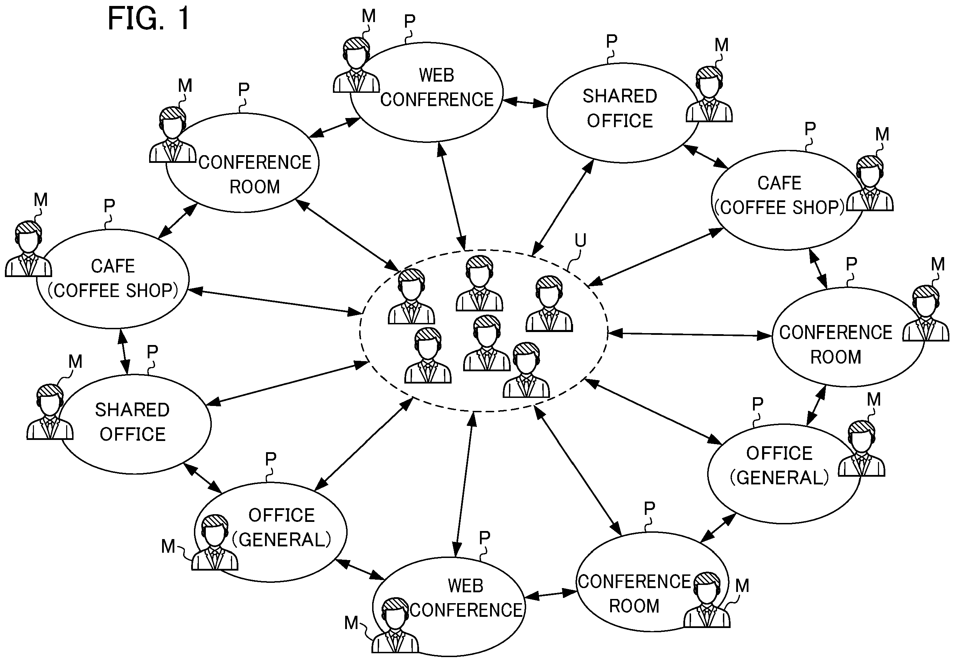

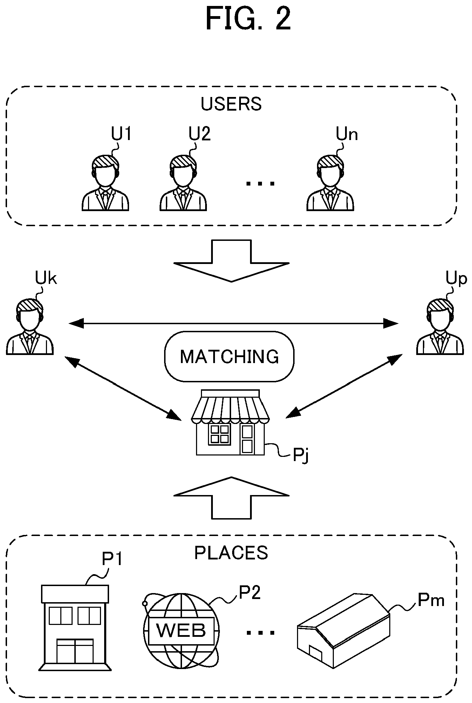

An embodiment of the present invention will be described with reference to the drawings. FIGS. 1 and 2 are image diagrams illustrating an outline of a service that can be implemented by an information processing system to which an information processing device according to an embodiment of the present invention is applied.

FIG. 1 depicts part of a plurality of users U registered to the present service, part of a plurality of places P registered to the present service, and respective owners O of the places P. The present service collectively manages information (hereinafter, referred to as the "user information") regarding each of the n registered users U and information (hereinafter, referred to as the "place information") regarding each of the m registered places P (where m is an integer equal to or greater than 1).

The place P is a space or location where the user U can perform various actions. Here, the space or location may be an open space (e.g., an outdoor location) or a closed space (e.g., a room), and further, can include not only a real space but also a virtual space. The space or location can include not only an actual location but also a location on the cloud (a location on the Internet, identified by a URL, etc.). Specifically, as illustrated in FIG. 1, examples of the places P include a conference room, a cafe (coffee shop), a shared office, a general office, a URL at which a web conference or the like is held, and a virtual space in which a conference room is placed for a conference held in VR or the like. In addition to the places P depicted in FIG. 1, for example, a coworking space, a lounge of an airport, a concourse of a station, a lobby of an office building, and the like are included in the places P. Here, even in the case of a lobby of a general office building, if a free space where a brief meeting or the like can be held is provided and registered to the present service, the free space serves as a place P as a target of matching. As a result, in the office building the business of offering the place P can be conducted, as a new source of revenue.

The present service can match (select) N users U (where N is an integer equal to or smaller than n) with (respect to) M places P (where M is an integer equal to or smaller than m, and independent from N) that are available to at least one of the N users U, based on the user information regarding each of n users U and the place information regarding the m places P. This feature allows the users U to perform an activity in one appropriate place P as occasion may demand.

Especially, since the present service performs matching according to an appropriately-set condition, each of the N users U can select one place P where at least one of guarantee of security, moral compliance, and establishment of management system is achieved. As a result, each of the N users U can easily use, alone or together with other users U at any time, the place P where at least one of guarantee of security, moral compliance, and establishment of management system is achieved.

Specifically, as illustrated in FIG. 2, an assumption is made that, for example, among users U1 to Un, a user Uk (where k is an integer from 1 to n) and a user Up (where p is an integer from 1 to n) who are out for different engagements need to have an emergency meeting. In this case, the user Uk and the user Up can use the present service, so that the present service performs matching to recommend to the users Uk and Up an optimal place Pj (where j is an integer from 1 to m) among the places P1 to Pm.

Here, the present service can perform the matching based on information indicating one or more contexts of the user (hereinafter referred to as the "context information") that forms at least part of the user information. The "context" is a concept referring to all of the internal and external states of the user U. The internal state of the user U includes a physical condition, emotion (a mood and a mental state), etc. of the user U. The external state of the user U includes not only a spatial or temporal position at which the user U is (where the temporal position means, for example, "time of day" as a point on a time axis where the user exists, and a "time zone" with a certain length where the user exists), but also predetermined states distributed in a spatial or temporal direction (or in both directions) around the user U. The "context information" may include, for example, activity data indicating activity contents of the user U; environmental data indicating the environment in which the user U is; subjective data about the physical condition of the user U; the position where the user U is; objective data about the physical characteristics of the user U, such as the age, height, weight, temperature, and body fat percentage; data about the genes of the user U; and schedule data, such as a schedule of daily actions and an action history of the user U.

The present service can perform, for example, the following matching with reference to the context information of the users U.

For example, an assumption is made that the user Uk, who is one of the users of the present service, visits a Company A (not illustrated) for a business purpose, without making an appointment in advance. In this case, according to the conventional technique, the user Uk could be turned away at the door because he/she did not make an appointment in advance. In contrast, according to the present service, the user Uk will not be turned away at the door at least for not having an appointment. Specifically, for example, if one of the board members of the Company A is the user Up of the present service, the positional information of each of the users Uk and Up is referred to as part of the context information. In this case, the positional information may be information indicating a current position or information indicating a registered position. Then, positional information matching is performed between the user Uk, the user Up, and the places P1 to Pm. The result of the matching (e.g., information regarding the location of a place Pj where both users can meet each other) is notified to both of the users Uk and Up. Consequently, the user Uk and the user Up can meet at the place Pj, which has been notified as the matching result. Further, for example, if a conference room of the Company A is registered as a place P to the present service, while the conference room of the Company A is specified in advance as the place Pj, the matching can be performed between the user Uk, the user Up, and the conference room of the Company A.

For example, an assumption is made that the user Uk and the user Up have been continuously addressing an action plan, and the deadline of the action plan is close. In this case, the present service refers to the information regarding the schedule of the user Uk and the information regarding the schedule of the user Up, as the context information. Matching is then performed between the schedule of the user Uk, the schedule of the user Up, and the places P1 to Pm. The result of the matching (information regarding the place Pj that is an optimal location for holding a meeting) is recommended to the user Uk and the user Up, together with a concrete schedule (date and time).

For example, the user Uk can use the present service to invite, as a host, another user Up to the place Pj. In this case, for the user Uk as the host, information regarding the location and schedule of the place Pj where a meeting is to be held is recommended. Thereafter, the user Up as the guest is notified of the information regarding the location and schedule of the place Pj. The notification (notification for inviting the guest to the meeting) may be sent by the host (user Uk) or by a service provider (not illustrated).

After performing the matching, the present service automatically manages the place Pj when the place Pj is going to be used or is being used by the users Uk and Up.

Specifically, for example, if the place Pj selected by the matching is a conference room C in a building B, the present service automatically performs management of a gate system of the building B and management of locking and unlocking of the conference room C.

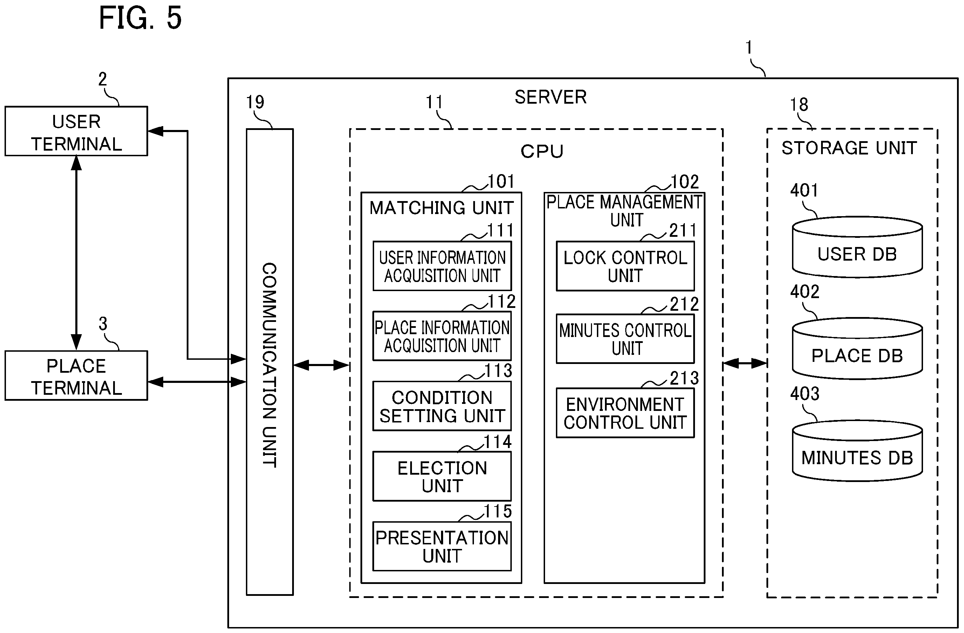

The management of the locking and unlocking of the conference room C is carried out by means of, for example, a tablet for user authentication (e.g., a place terminal 3 illustrated in FIG. 5 to be described later) installed at the entrance of the conference room C. In this case, user authentication is performed in such a manner that the user Uk or the user Uj holds his/her smartphone or the like (e.g., a user terminal 2 to be described later) up to the tablet or the like installed at the entrance of the conference room C. Alternatively, the user authentication may be performed by way of face authentication or fingerprint authentication using face image data or fingerprint image data of the user Uk and the user Uj visiting the conference room C.

Further, the present service can perform, for example, management of furniture and equipment furnished in the conference room C. In this case, it is possible to cooperate with a system of a building maintenance company associated with the building B and a system of a vendor dealing with the furniture and equipment in the conference room C.

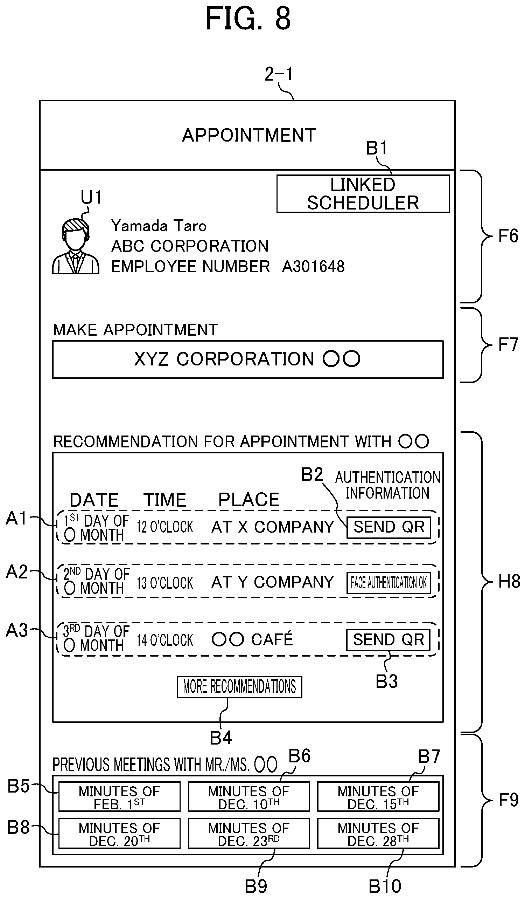

Further, for example, the present service can automatically record a meeting held in the conference room C, and automatically prepare the minutes of the meeting. This feature makes it possible for the users U who have used the conference room C to check the contents of meetings or conferences at any time later. A specific example of a process by which the user U checks the contents (minutes) of a conference or meeting will be described later with reference to FIG. 8.

Further, for example, the present service can manage the environment in the conference room C. Specifically, for example, to allow the users U to comfortably use the conference room C, the present service can manage music played in the room, scent in the room, etc. That is to say, the matching performed by the present service is not limited to mere presentation of the position and the like of the place P that is available to the users U. For example, the present service can perform matching to provide a place P that is beautiful and fit for each user U such that the user U feels like using the place P anytime.

Further, for example, according to the present service, the user U, the corporation to which the user U belongs, and the owner O of the place P are each allowed to enjoy the following advantages, in addition to the above mentioned advantages. When actually using the place P, the user U can reduce the time costs required for the following: an unnecessary application procedure, a series of reporting, communication, and consultation (the so-called "ho-ren-so" in the Japanese language), and appointment booking. In addition, the corporation to which user U belongs can easily perform labor management of the user U. Furthermore, if the corporation employs a system in which the user U works at a satellite office, the present service makes it possible for the corporation to choose not to have the satellite office, thereby enabling reduction of the costs accordingly. Since each of the user U as an individual and the corporation as a legal entity can enjoy the advantages in this way, the owner O of the place P can easily conduct the business of providing the place P to customers including individuals and legal entities. Further, billing operations and the like involved in the business of this type can be simplified by way of cooperation with the present service.

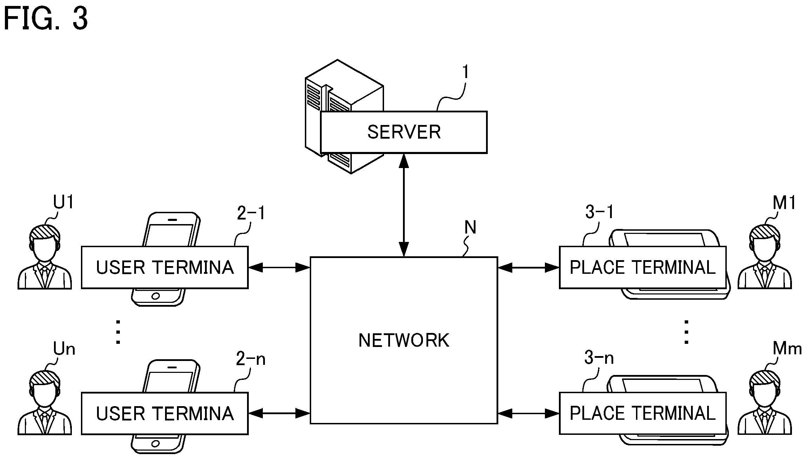

Next, a configuration of an information processing system for implementing the present service illustrated in FIGS. 1 and 2 will be described. FIG. 3 is a diagram illustrating the configuration of the information processing system including a server according to an embodiment of the information processing device of the present invention.

The information processing system illustrated in FIG. 3 includes the server 1, user terminals 2-1 to 2-n, and place terminals 3-1 to 3-m. The server 1, the user terminals 2-1 to 2-n, and the place terminals 3-1 to 3-m are connected to each other via a predetermined network W, such as the Internet. Note that the user terminals 2-1 to 2-n and the place terminals 3-1 to 3-m may communicate with each other as appropriate via Bluetooth (registered trademark), Near Field Communication (NFC; registered trademark), or the like, without intervention of the network W.

The server 1 is an information processing device managed by the provider of the present service. The server 1 executes various types of processing for implementing the present service, while appropriately communicating with the user terminals 2-1 to 2-n and the place terminals 3-1 to 3-m.

Each of the user terminals 2-1 to 2-n is an information processing device operated by an associated one of the users U1 to Un. The user terminals 2-1 to 2-n are each constituted by, for example, a smartphone, a tablet, or the like. In the following description, when the users U1 to Un are referred to as "the user(s) U" without being distinguished from each other, the user terminals 2-1 to 2-n are collectively referred to as "the user terminal(s) 2". For example, in the user terminal 2 of the present embodiment, dedicated application software for receiving the present service (hereinafter, referred to as the "dedicated application") is installed. Unless otherwise noted, an expression "the user U operates the user terminal 2" means that the user U starts the dedicated application installed in the user terminal 2 and carries out various operations.

Each of the place terminals 3-1 to 3-m is an information processing device provided so that owners O1 to Om each manage an associated one of the places P1 to Pm. The place terminals 3-1 to 3-m are each constituted by, for example, a tablet, a smartphone, or the like. In the following description, when the places P1 to Pm, the owners O1 to Om, and the place terminals 3-1 to 3-m do not need to be individually distinguished, the places are collectively referred to as "the place(s) P", the owners as "the owner(s) O", and the place terminals as "the place terminal(s) 3". In each of the place terminals 3-1 to 3-m, a dedicated application for receiving the present service is installed. In the following description, unless otherwise noted, an expression "the owner O operates the place terminal 3" means that the owner O starts the dedicated application installed in the place terminal 3 and carries out various operations.

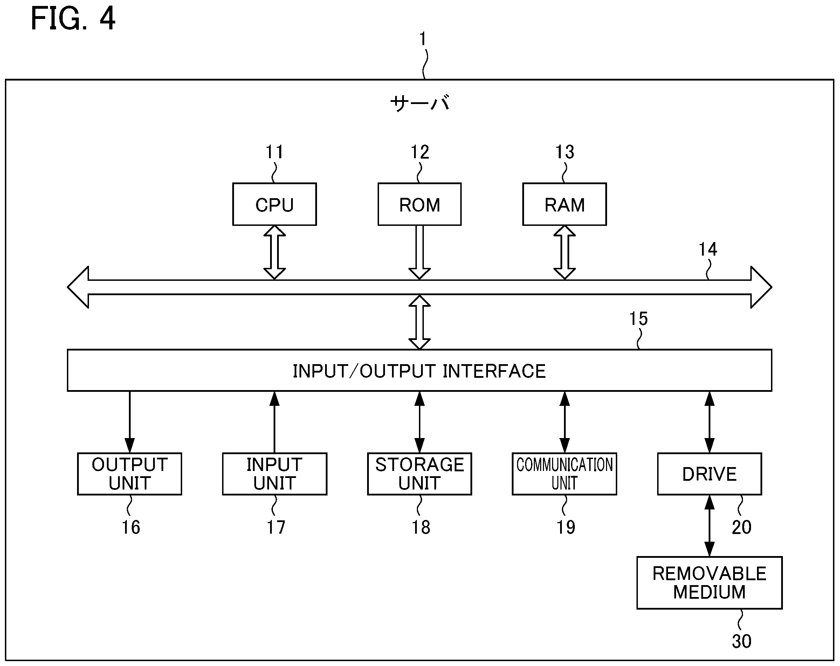

Next, a hardware configuration of the server 1 included in the information system illustrated in FIG. 3 will be described. FIG. 4 is a block diagram illustrating, as an example, the hardware configuration of the server 1 included in the information processing system of FIG. 3.

The server 1 includes a central processing unit (CPU) 11, a read only memory (ROM) 12, a random access memory (RAM) 13, a bus 14, an input/output interface 15, an output unit 16, an input unit 17, a storage unit 18, a communication unit 19, and a drive 20.

The CPU 11 executes various types of processing according to a program stored on the ROM 12 or a program loaded to the RAM 13 from the storage unit 18. On the RAM 13, data and the like required for the CPU 11 to perform various types of processing are also stored as appropriate.

The CPU 11, the ROM 12, and the RAM 13 are connected to each other via the bus 14. The input/output interface 15 is also connected to the bus 14. The input/output interface 15 is connected to the output unit 16, the input unit 17, the storage unit 18, the communication unit 19, and the drive 20.

The output unit 16 is constituted by a display, such as a liquid crystal display, and is configured to display various images. The input unit 17 is constituted by various hardware buttons and the like. An operator instructs or operates the input unit 17 to input various items of information.

The storage unit 18 is constituted by, for example, a dynamic random access memory (DRAM), and stores various data. The communication unit 19 controls communication with other devices (e.g., the user terminals 2, and the place terminals 3), the communication being performed via the network W including the Internet.

The drive 20 is provided as needed. The drive 20 is equipped with a removable medium 30 constituted by, for example, a magnetic disk, an optical disk, a magnetic optical disk, or a semiconductor memory, as appropriate. A program read from the removable medium 30 by the drive 20 is installed in the storage unit 18 as necessary. Like the storage unit 18, the removable medium 30 can also store various data stored in the storage unit 18.

Although not illustrated, the user terminal 2 and the place terminal 3, which are included in the information processing systems of FIG. 3, also have the same hardware configuration as illustrated in FIG. 4. However, when the user terminal 2 and the place terminal 3 are constituted by a smartphone or a tablet, the terminals 2 and 3 have a touch panel that functions as the output unit 16 and the input unit 17.

The above described various hardware components of the server 1 illustrated in FIG. 4 cooperate with various types of software, thereby enabling the server 1 to execute various types of processing, such as matching processing and place management processing. As a result, the service provider can provide the above described service to the users U and the owners O. Here, the "matching processing" refers to a series of processing executed until N users U are matched with M places P based on a predetermined condition. The "place management processing" refers to processing for performing at least one of the following controls as the management of the place P selected through the matching: control for locking and unlocking of the entrance and exit of the place P; and control for generating text data based on recorded voice data.

FIG. 5 is a functional block diagram illustrating, as an example, a functional configuration that forms part of the functional configuration of the server 1 of FIG. 4, and that enables the matching processing and the place management processing to be executed.

As illustrated in FIG. 5, in the CPU 11 of the server 1, a matching unit 101 functions when the matching processing is executed, and a place management unit 102 further functions when the place management processing is executed. The storage unit 18 of the server 1 includes, in an area thereof, a user DB 401, a place DB 402, and a minutes DB 403.

When the matching processing is executed, a user information acquisition unit 111, a place information acquisition unit 112, a condition setting unit 113, a selection unit 114, and a presentation unit 115 function in the matching unit 101.

The user information acquisition unit 111 is configured to acquire the user information of each of the users U1 to Un. The user information acquired by the user information acquisition unit 111 is stored and managed in the user DB 401.

The place information acquisition unit 112 is configured to acquire the place information of each of the places P1 to Pm. The place information acquired by the place information acquisition unit 112 is stored and managed in the place DB 402.

The condition setting unit 113 is configured to set a predetermined condition related to the matching. Specifically, for example, when one or more users U who use a place P have been determined, the condition setting unit 113 can set a condition including, as elements, at least the position and the schedule of each of the one or more users U. More specifically, for example, an assumption is made that the current time is 14:30, and the matching is performed to determine a place P where a user U1 who is at Tokyo Station and a user U2 who is at Shinjuku Station can hold a meeting. It is further assumed that the user U1 is free from 14 o'clock to 16 o'clock, whereas the user U2 is free from 15 o'clock to 17 o'clock. In this case, the condition setting unit 113 sets a condition including, as elements, the current time (i.e., 14:30), the current position of the user U1 (i.e., Tokyo Station), the current position of the user U2 (i.e., Shinjuku Station), and the respective schedules of the users U1 and U2 (i.e., the user U1 is free from 14 o'clock to 16 o'clock, whereas the user U2 is free from 15 o'clock to 17 o'clock).

The selection unit 114 is configured to select N users U, and M places P that are available to at least one of the N users U, based on the acquired user information of each of the users U1 to Un and the acquired place information of each of the places P1 to Pm. Specifically, for example, when the user U1 and the user U2 have already been determined as the matching targets while N is set to 2, the selection unit 114 selects one or more places P satisfying the condition set by the condition setting unit 113, from the places P1 to Pm. More specifically, for example, in the example described above, it is assumed that a coffee shop that takes 20 minutes to get to from Tokyo Station, but only a few minutes from Shinjuku Station is registered as the place P1, and a cafe that takes only a few minutes to get to from Tokyo Station, but 20 minutes from Shinjuku Station is registered as the place P2. In this case, a place Pq (where q is an integer from 1 to m) in which a space for two persons will be vacant from 15 o'clock to 16 o'clock, and which is reachable within 30 minutes from both of Tokyo Station and Shinjuku Station (with the current time 14:30 taken into consideration) is selected as one of the places P satisfying the condition set by the condition setting unit 113.

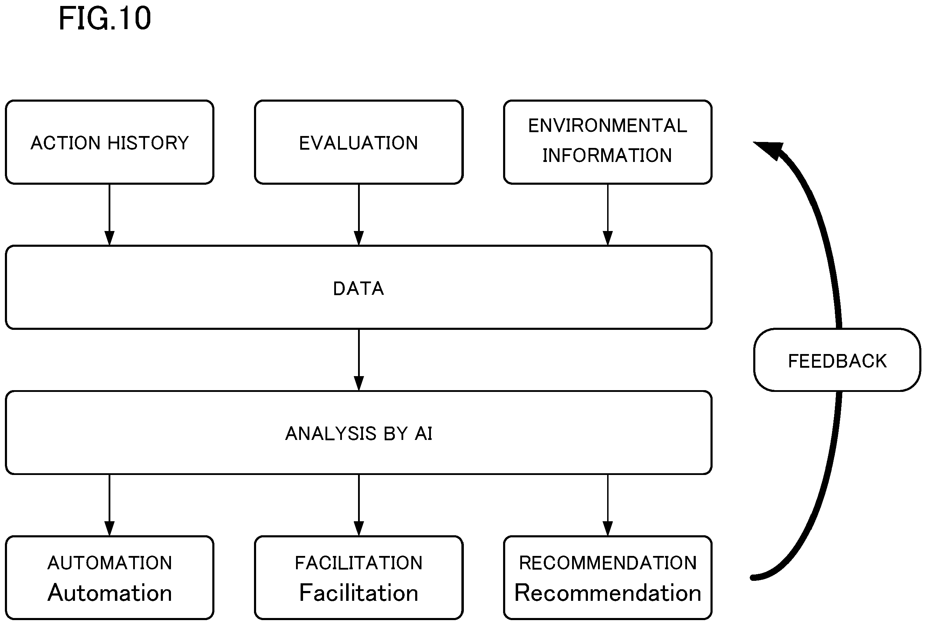

The presentation unit 115 is configured to present to the users U the result and the like of the selection by the selection unit 114. Specifically, for example, in the above described example, the presentation unit 115 presents information regarding the place Pq (e.g., the place information of the place Pq) selected by the selection unit 114 to the users U1 and U2, together with supplementary information (e.g., information indicating that a space is vacant from 15 o'clock to 16 o'clock, and information indicating a way to the place Pq from Tokyo Station or Shinjuku Station, etc.). The process by which the presentation unit 115 presents the information is not particularly limited. The present embodiment is described on an assumption that, for example, a process is employed by which the information in a form displayable on the user terminal 2 operated by the user U is transmitted to the user terminal 2. The presentation unit 115 is configured to generate and present predetermined information based on an action history of the user, evaluation of each of the user and the place, and information regarding the environment of the place, which are included in at least one of the user information or the place information. The specific example of the predetermined information will be described later with reference to FIG. 10.

The server 1 having the above described functional configuration can execute the matching processing. In this case, by appropriately setting a condition related to, for example, guarantee of security, moral compliance, and establishment of management system, the server 1 can easily recommend to the user U a place P where at least one of the guarantee of security, the moral compliance, and the establishment of management system is achieved.

Next, a functional configuration for enabling the place management processing will be described. When the place management processing is executed, a lock control unit 211, a minutes control unit 212, and an environment control unit 213 function in the place management unit 102.

The lock control unit 211 is configured to control locking and unlocking of the entrance and exit of the place P selected by the selection unit 114.

The minutes control unit 212 is configured to execute control for generating text data as the minutes of a meeting or conference, based on voice data recorded by a recorder (not illustrated) installed in the place P selected by the selection unit 114. The generated minutes are stored and managed in the minutes DB 403. By executing the place management processing, the server 1 having the above functional configuration can perform not only the matching, but also total management of the "place" selected by way of the matching.

The environment control unit 213 is configured to control the environment of the place P selected by the selection unit 114, based on the user information of the user U selected by the selection unit 114 (i.e., the user U who uses the place P). For example, the environment control unit 213 performs control such that the user U using the place P feels comfortable with music played in the place P, scent drifting in the place P, an indoor temperature, an indoor humidity, and the like. Here, when two or more users U are using the place P and the two or more users U include a host(s) and a guest(s), the environment control unit 213 can also perform control such that the music played in the place P, the drifting scent, the indoor temperature, the indoor humidity, and the like will be comfortable especially to the guest(s). This feature makes it possible for the host(s) to offer satisfactory hospitality to the guest (s) .

In the user DB 401, the user information including the context information of each of the users U1 to Un registered to the present service is managed in association with an identifier such as an ID that uniquely identifies each of the users U1 to Un. In the place DB 402, the place information of each of the places P1 to Pm provided by the respective owners O1 to Om to the present service is managed in association with an identifier such as an ID that uniquely identifies each of the places P1 to Pm. The minutes DB 403 stores and manages the generated minutes.

Various types of processing (e.g., the matching processing and the place management processing) executed by the server 1 having the above described functional configuration enable provision of the present service to the users U.

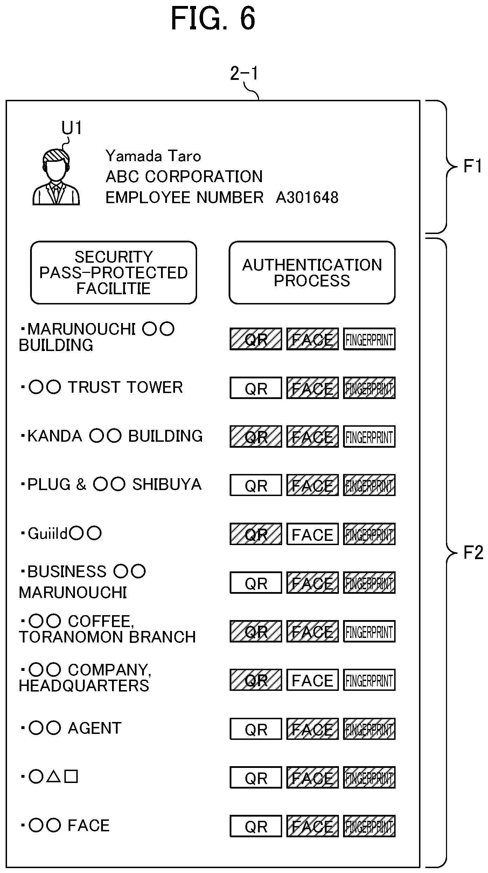

Next, specific examples of GUIs displayable on the user terminal 2 will be described with reference to FIGS. 6 to 8.

FIG. 6 illustrates a list of security pass-protected facilities. The "security pass-protected facility" refers to a facility having a place P that can be used when user authentication is performed by a predetermined authentication process.

The screen illustrated in FIG. 6 is composed of a display area F1 and a display area F2. The display area F1 displays the name of the user U, the name of the company employing the user U, and the employee number assigned by the company. Specifically, the display area F1 indicates the name of the user as "Yamada Taro", the company name as "ABC Corporation", and the employee number as "A301648".

The display area F2 displays a list of the security pass-protected facilities and icons indicating three types of authentication processes that can be available at each security pass-protected facility. Specifically, the display area F2 displays icons indicating authentication with "QR code (registered trademark)", icons indicating authentication with "face", and icons indicating authentication with "fingerprint". Thus, the user U can grasp, in one glance, the authentication processes of each security pass-protected facility. Thus, the user can avoid an inconvenient situation in which he/she cannot use the place P (security pass-protected facility) because of incompatibility between authentication processes, despite having an appointment with another user U at the place P. Specifically, for example, it is indicated that among the security pass-protected facilities, "Marunouchi OO Building" can be used by authentication with "QR code (registered trademark)" or "face", but it does not support authentication with "fingerprint". For example, it is also indicated that among the security pass-protected facilities, "OO Trust Tower" is available by authentication with "face" or "fingerprint", but it does not support authentication with "QR code (registered trademark)". Specific examples of the authentication processes of the other security pass-protected facilities are illustrated in FIG. 6.

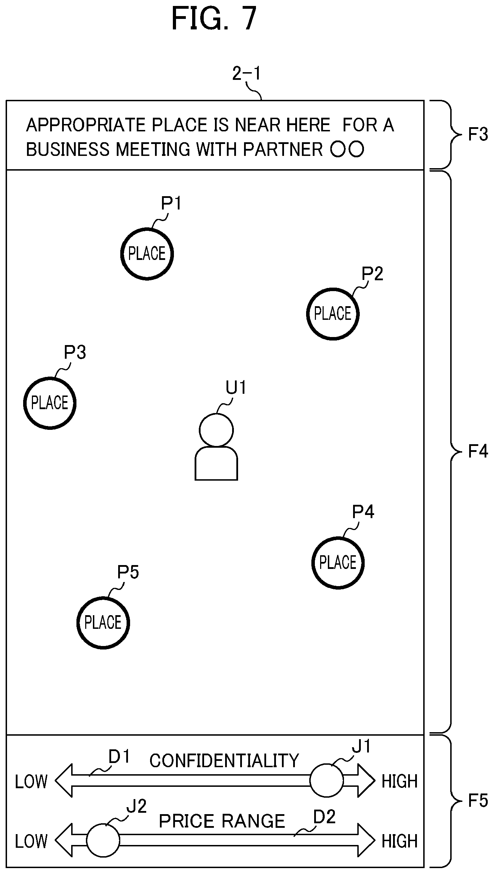

FIG. 7 illustrates an example of a screen displayable on the user terminal 2-1 when the user U1 uses the present service to hold a business meeting with the user U2.

The screen illustrated in FIG. 7 is composed of display areas F3 to F5. The display area F3 displays a message from the present service to the user U1. Specifically, the displayed message says as follows: "There are appropriate places nearby for a business meeting with your partner, Mr./Ms. OO (user U2)".

The display area F4 displays the positional relationship between the position where the user U1 is and the position of each of places P that are determined suitable for the business meeting with the user U2. Specifically, the display area F4 centers the position of the user U1, and displays the positional relationship between the location of the user U1 and the respective position s of the places P1 to P5. Although not illustrated, it is also possible to display a detailed map in a superimposed manner.

The display area F5 displays setting bars D1 and D2 that indicate display levels according to which the places P are displayed on the map in the display area F4. Specifically, the display levels are set in association with some elements of the places P displayable on the map in the display area F4. The setting bar D1 is for setting a display level associated with degrees of "confidentiality". The setting bar D2 is for setting a display level associated with "price range", as one of the elements of the places P displayable on the map in the display area F4.

For example, the user U1 can set the display level associated with the degrees of confidentiality by laterally sliding a setting knob J1 present on the setting bar D1. The display level associated with the degrees of confidentiality becomes higher as the setting knob J1 is slid to the right, and becomes lower as the setting knob J1 is slid to the left. In the case illustrated in FIG. 7, the setting knob J1 has been slid to be in proximity to the right end, which means that the display level associated with the degree of confidentiality is set considerably high. The initial position of the setting knob J1 is automatically set by the present service. Specifically, in the case illustrated in FIG. 7, due to the precondition that the "business meeting" will be held between the users U1 and U2, automatic setting is implemented such that the places P with a high degree of confidentiality are displayed in the display area F4. Note that the user U1 can slide the setting knob as he/she wants. If a high degree of confidentiality is not required for the business meeting, the user U1 slides the setting knob J1 to the left, so that different places P are displayed in the display area F4.

For example, the user U1 can set the display level associated with the price range by laterally sliding a setting knob J2 present on the setting bar D2. The display level associated with the price range becomes higher as the setting knob J2 is slid to the right, and becomes lower as the setting knob J2 is slid to the left. In the case illustrated in FIG. 7, the setting knob J2 has been slid to be in proximity to the left end, which means that the display level associated with the price range is set considerably low. The initial position of the setting knob J2 is automatically set within a price range preset by the user U1. Specifically, in the case illustrated in FIG. 7, based on the price range preset by the user U1, automatic setting is implemented such that the places P corresponding to a low level of the price range are displayed in the display area F4. Note that the user U1 can slide the setting knob as he/she wants. The user U1 can make different places P display in the display area F4, according to his/her price range.

FIG. 8 illustrates an example of a screen that is displayed on the user terminal 2-1 when the user U1 intends to make an appointment for a business meeting with the user U2, based on the result of the matching performed by the present service.

The screen illustrated in FIG. 8 is composed of display areas F6 to F9.

The display area F6 displays part of the user information of the user U1 and a button B1 for starting other application software for schedule management, linked with the present service.

The display area F7 displays a field for inputting the name of the person with whom the user U1 wants to make an appointment. Specifically, the input indicates that the user U1 wants to make an appointment with "Mr./Ms. OO" (user U2) of "XYZ Corporation".

The display area F8 displays a plurality of candidates for the appointment schedule. The candidates for the appointment schedule displayed in the display area F8 are those recommended by the present service. That is, the present service performs matching between the schedule of the user U1 and the schedule of the user U2, extracts common schedule, and displays the schedules on the user terminal 2-1. Specifically, the display area F8 displays three candidates (appointments A1 to A3) as the contents of the candidates for the appointment. That is, the following candidates for the appointment are displayed: Appointment A1 scheduled at 12 o'clock on the 1^{st} day of OO month, and at X Company as the place P; Appointment A2 scheduled at 13 o'clock on the 2^{nd} day of OO month, and at Y Company as the place P; and Appointment A3 scheduled at 14 o'clock on the 3^{rd} day of OO month, and at OO Cafe as the place P.

Authentication information is displayed for each of Appointments A1 to A3. Among these appointments, Appointment A1 and Appointment A3 are displayed along with the letters "send QR". This means that the places P (X Company and OO Cafe) corresponding to Appointments A1 and A3 are both places P where user authentication with the QR code (registered trademark) is available. The letters "send QR" of Appointments A1 and A3 are displayed in the form of buttons B2 and B3. The buttons B2 and B3 are for sending, in advance, the QR code (registered trademark) for use in the user authentication at the place P on the day of the business meeting. The QR code (registered trademark) is sent to the owner O when the button is pushed.

For Appointment A2, the letters "Face Authentication OK" are displayed. These letters are not displayed in the form of a button, and indicate that the place P (Y Company) corresponding to Appointment A2 employs face authentication as a user authentication process.

The display area F8 displays a button B4. When the user U1 wants more candidates for the appointment displayed, he/she pushes the button B4. When the button B4 is pushed, in addition to the Appointments A1 to A3, Appointments A4 to Aq (where q is an integer equal to or greater than 5) are displayed. However, when there are no further candidates, such additional appointments are not displayed.

The display area F9 displays buttons B5 to B10 for downloading the minutes of business meetings that have been held so far between the user U1 and the user U2 (Mr./Ms. OO). For example, when the user U1 wants to review the contents of a past business meeting, he/she can download the minutes of the business meeting of interest by pushing the corresponding button, among the buttons B5 to B10.

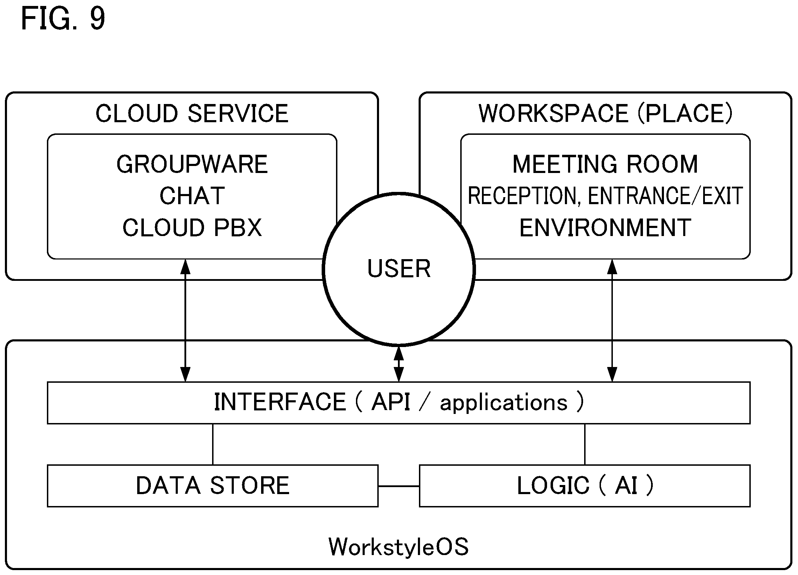

Next, "Workstyle OS", which is a specific application example of the present service will be described with reference to FIGS. 9 and 10. FIG. 9 is an image diagram illustrating the outline of "Workstyle OS".

"Workstyle OS" is a specific application example of the present service implemented by the processing performed by the server 1 illustrated in FIG. 3. "Workstyle OS" is linked with a user U, a cloud service, and a workspace (i.e., "place P") through an application programming interface (API). The cloud service manages, for example, groupware, chat, cloud PBX (Private Branch Exchange), etc. In the workspace (i.e., "place P"), information regarding, for example, a meeting room, reception, an entrance/exit, environment, etc. are managed. "Workstyle OS" manages information (e.g., the user information and the place information) by way of data store, and analyzes information by way of logic of artificial intelligence (AI). The results of the analysis are presented (fed back) to the user U. Consequently, the user U can perform actions with reference to the presented analytical results, so that the quality of his/her work can be improved. The term "work" means an economical production activity that is performed by the user U, and is a target of an output of "Workstyle OS". The "work" includes a case where one user U conducts business, a case where two or more users U hold a conference or the like, and a case where several or more users U work at a factory, a construction site, etc. In addition, business meetings with customers and provision of services to customers are also included in the "work". In "Workstyle OS", a feedback loop for facilitating continuous improvement of productivity is formed.

FIG. 10 is an image diagram illustrating an outline of the feedback loop.

The "Workstyle OS" analyzes an action history of the user U (i.e., a usage history of the "place" by the "person"), evaluation (i.e., evaluation of the "place" by the "person" or evaluation of the "person" who used the "place"), and environmental information (i.e., information regarding the environment of the "place" or the context information of the "person" who uses the "place"). The results of the analysis are then visualized and presented to the user U (i.e., the "person") associated with each of the action history, the evaluation, and the environmental information that have been subject to the analysis. In this way, the feedback loop is formed. Specifically, the information is visualized in the forms of automation, facilitation, and recommendation by AI (artificial intelligence). The visualized information is then presented (fed back) to the user U. More specifically, as illustrated in FIG. 10, first, the action history of the user U, the evaluation, and the environmental information are inputted. The "action history" includes a visit history (e.g., entering and leaving facilities, meetings, and passage through security areas) of the user U as the "person". The "action history" further includes, for example, information from a cloud service linked to the actions (e.g., an attendance record, personnel shifts, conferences, and passage through security areas) of the user U (e.g., an employee). The "evaluation" includes evaluation of outputs at conferences, self-evaluation of productivity of the user U (e.g., an employee), evaluation of workspaces, etc. The "environmental information" includes information such as a temperature, a humidity, a pressure (e.g., generally-acquirable public data), and information such as an indoor temperature, an indoor humidity, brightness, and noise (e.g., data acquired by various sensors).

When the action history of the user U, the evaluation, and the environmental information are inputted, an analysis and visualization are carried out by AI (artificial intelligence). The inputted information is then visualized in the forms of the above described automation, facilitation, and recommendation. Specifically, for example, information indicating relevance and correlation of the inputted information is automatically generated and presented to the user U. The "automation" includes, for example, detecting and reporting a signal indicative of a decrease in productivity, optimizing selection of a conference room, sharing outputs of a conference among participants, operating equipment in conjunction with an action, and linking an action of the user U to external services. The "facilitation" includes, for example, providing an action plan frame up to completion of a task, and providing a frame for maximizing outputs of a conference and for minimizing costs. The "recommendation" includes, for example, proposing a work style for increasing productivity (e.g., time and location), proposing improvement of layout and equipment of a conference room, proposing a next conference, providing suggestions for avoiding a health risk, and proposing improvement for efficient completion of a task. Thus, after receiving the presentation of the information, the user U can perform better action and evaluation, and can use the place P with a better environment.

Specifically, "Workstyle OS" implements the "automation", the "facilitation", and the "recommendation" according to, for example, the following scenarios. According to a first scenario, the user U declares (i.e., inputs) his/her daily work style by way of an input operation into a dedicated application provided by the "Workstyle OS". Start of a task by the user U is detected (i.e., inputted) by an IC tag or various sensors. The consecutive working hours and production activities of the user U are registered (i.e., inputted). "Workstyle OS" visualizes (i.e., visualizes by automation) the productivity of the user U, based on the inputted information. "Workstyle OS" further provides proposal for (i.e., makes recommendations about) breaks and exercises to the user U. In an office (place P), environmental information regarding, for example, an indoor temperature, a humidity, and a carbon dioxide concentration, is monitored (i.e., inputted). Information from various sensors installed at a chair, a desk, etc. disposed in a workspace (place P) is acquired (i.e., inputted), and a correlation with evaluation of the productivity of the user U is visualized (i.e., visualized by automation). In addition, an improvement process is proposed (i.e., recommended) to the user U. When the user U is out, information regarding an efficient travel route and information regarding a shared office (place P) available in free time are proposed (i.e., recommended). If "Workstyle OS" is installed in a security building (i.e., a security pass-protected facility) that the user U is going to visit, the user U can smoothly enter the building without taking procedures such as ID registration.

According to a second scenario, when the "Workstyle OS" detects (i.e., inputs) conference information set through cloud groupware or the like, the user U is requested to input a "purpose" and an "agenda" (i.e., facilitation is implemented). If a scheduled time of the conference is too long, it is suggested (i.e., recommended) to shorten the scheduled time. A reminder notification is sent to the participants of the conference at a timing before the start of the conference (i.e., notification is sent by automation). Further, when the start of the conference is detected (i.e., inputted) by a sensor installed in the conference room, equipment, such as lighting, an air conditioner, a projector, and a video deck, is automatically started (i.e., operations are started by automation). While the conference is going on, progress of discussion on the agenda is grasped (i.e., inputted) by actions on a terminal installed in the conference room, and advice is provided as necessary. Lapse of the conference time is monitored, and assistance is provided such that the conference ends within the scheduled time (i.e., facilitation is implemented). In addition, when the end of the conference is detected (i.e., inputted), the registration of the result of the conference and the registration of the evaluation of the conference are encouraged (i.e., facilitation is implemented). In addition, the minutes of the conference are automatically distributed to the participants (i.e., the minutes are distributed to the participants by automation). The usage status and productivity status of the conference room are periodically notified to an administrator and the owner O (i.e., recommendations are made by automation). This feature allows the administrator and the owner O to easily form a plan for the layout of the office (place P) and a plan for upgrading the equipment.

Further, "Workstyle OS" can establish a link with any devices and software in an office, and therefore, can provide a comfortable workspace (place P) to the user U. Specifically, for example, it is possible to turn on an air-conditioner a predetermined time prior to (e.g., 5 minutes before) the scheduled time at which the user U checks into a conference room (place P). For example, upon being triggered by the user U's checking in the conference room (place P), "Workstyle OS" can turn on the switch of lighting, and the power of a projector, or starts application software for web conference. Further, for example, registration to SFA (Sales Force Automation) can be automatically carried out upon being triggered by a customer's check-in at customer reception. In addition, for example, when a visitor is attended at reception, it is possible to register the visitor and to call the visitor's host at the same time, simply by holding a business card of the visitor over a reader or the like cooperating with application software for reception. For example, an alert can be sent to chat when a situation is detected in which a person who is not granted permission in advance is attempting to enter a room. For example, "Workstyle OS" may assign a common ID to the user U such that the user U can access a plurality of security buildings using the common ID.

Further, "Workstyle OS" can establish a link with workspaces (places P) present outside a company, thereby making it possible to realize a society in which the user U is provided with a highly productive work environment without having to worry about time and locations. Specifically, for example, if there is a shortage of conference rooms (places P) in a company, "Workstyle OS" makes it possible to immediately reserve an external conference room in the neighborhood. For example, if an unexpected conference needs to be held outside the company, "Workstyle OS" makes it possible to immediately reserve a conference room in the neighborhood. Further, for example, "Workstyle OS" can realize a declaration in which the user U is the subject, and a feedback of a result (remote work). For example, "Workstyle OS" enables the environment of a workspace (place P) to be shared among the users U. This feature makes it possible to provide the users U with an opportunity to find a workspace (place P) where the users U can increase productivity. For example, the owner O of the workspace (place P) can also receive feedback of information regarding the evaluation and the productivity of the workspace (place P). This feature makes it possible to provide the owner O of the workspace (place P) with an opportunity to update the workspace (place P) so that it contributes to the improvement of productivity.

Further, in "Workstyle OS", AI (artificial intelligence) performs machine learning, so that information (e.g., the user information and the place information) acquired from the user U and the workspace (place P) is analyzed. With this feature, an output is recommended which allows the user U to work more comfortably with higher productivity. Specifically, for example, in a case where the user U has been using a personal computer for one hour or longer, a health risk is detected and an alert can be sent to the user U. For example, an optimal action plan for the day can be presented based on the schedule of the user U. It is also possible to suggest a break to the user U by way of link with information (e.g., a heart rate, a body temperature, etc.) sent from a wearable device of the user U. In this case, for example, when it is detected that the user U comes to feel comfortable as a consequence of a break, it can be suggested to the user U to return to work. For example, a weekly schedule, a location of work, and a progress status of the user U are detected based on information from a dedicated application used by the user U or information from a service linked with "Workstyle OS", so that a degree of achievement can be evaluated or an improvement strategy can be proposed.

In the foregoing, one embodiment of the present invention has been described. However, the above described embodiment is not intended to limit the present invention, and the present invention encompasses modifications, improvements, and the like that are made within a range where the object of the present invention can be achieved.

For example, in the above described embodiment, the present service can be used by starting the dedicated application installed in the user terminal 2 and the dedicated application installed in the place terminal 3. However, the present invention is not limited to this configuration. The present service may be made available by means of access to a predetermined website and a predetermined login operation, without install of the dedicated applications.

Further, for example, the setting bars D1 and D2 described above with reference to FIG. 7 are respectively configured to set the display levels associated with the degrees of confidentiality and the price range, which are elements of the place P. However, the present invention is not limited to this configuration. Another setting bar may be provided to set a display level associated with another element. For example, a setting bar may be provided to set a display level associated with another element of the place P, such as "size" or "sense of quality".

For example, in the above described embodiment, the user U is assumed to be a person. However, this is a non-limiting example, and the user U does not have to be a person. For example, the user U may be an avatar existing in virtual reality (VR) or augmented reality (AR), or a robot existing in the real world.

Further, in the above described embodiment, the present service performs the matching between two users U. However, the number of the users U is not limited to two, but may be three or more. Alternatively, one user U may be subjected to the matching. In the case where one user U is subjected to the matching, for example, it is possible to find, by the matching, a place where the one user U can alone do a side job in free time. In addition, the place P does not have to be reserved, and may be used without reservation.

Further, the hardware configuration of the server 1 illustrated in FIG. 4 is merely an example for achieving the object of the present invention, and is not particularly limited.

Further, the functional block diagram of FIG. 5 is illustrative only and is not particularly limited. That is, it is sufficient for the information processing system to have functions to execute the above described series of processing as a whole, and functional blocks for realizing the functions are not limited to the example illustrated in FIG. 5.

The locations of the functional blocks are not limited to what is illustrated in FIG. 5, and may be optional. One functional block may be composed of hardware alone, software alone, or a combination thereof.

When the processing of each functional block is executed by means of software, a program constituting the software is installed in a computer or the like from a network or a recording medium. The computer may be a computer incorporated in dedicated hardware. The computer may be a computer capable of performing various functions by installing various programs, such as a server, a general-purpose smartphone, or a personal computer.

The recording medium having such a program recorded thereon may be not only a removable medium distributed separately from a device body in order to provide the program to each user, but also a recording medium provided to each user as a pre-incorporated component of the device body.

In the present specification, steps of describing a program to be recorded on a recording medium include not only processing steps performed in time sequence and in an order, but also processing steps executed in parallel or individually, but not in time sequence.

In addition, in the present specification, the term "system" refers to an overall device including a plurality of devices, a plurality of means, and the like.

In summary, the information processing device to which the present invention is applied is only required to have the following configuration, and can be implemented in various embodiments. That is, the information processing device to which the present invention is applied (e.g., the server 1 illustrated in FIG. 5) includes, a selection portion (e.g., the selection unit 114 illustrated in FIG. 5) that selects, based on first information (e.g., the user information described above) regarding each of n persons (where n is an integer equal to or greater than 1, and the n persons include, for example, the users U1 to Un illustrated in FIG. 3) and second information (e.g., the place information described above) regarding m places (where m is an integer equal to or greater than 1, and the m places include, for example, the places P1 to Pm illustrated in FIG. 3), N persons (where N is an integer equal to or smaller than n, and the N persons include, for example, the users Uk and Up illustrated in FIG. 2) from the n persons, and M places (where M is an integer equal to or smaller than m, and independent from N, and the M places include, for example, the place Pj illustrated in FIG. 2) that are available to at least one of the N persons.

This feature allows the users (at least the one of the selected N persons) to perform an activity in appropriate places (at least one of the selected M places) as occasion may demand. In other words, it is sometimes necessary for a place for meetings or work to ensure power supply and a communication environment such as Wi-Fi (registered trademark), and to guarantee a certain level of confidentiality from the viewpoint of preventing information leakage. On the other hand, it is often not easy to find a conference room or a meeting place that is available in a timely fashion. Even in this case, the present invention makes it possible to easily provide a user with a place for a meeting, a conference, or the like, in which power supply and communication environment such as Wi-Fi (registered trademark) are ensured, in which a certain level of confidentiality is guaranteed from the viewpoint of preventing information leakage, and which can be used in a timely fashion.

The information processing device may further include a condition setting portion (e.g., the condition setting unit 113 illustrated in FIG. 5) that sets a condition for selection by the selection portion. The selection portion can select the N persons and the M places that meet the condition, based on the first information and the second information.

This feature makes it possible to achieve the following effect. Being allowed to perform an activity in an appropriate place as occasion may demand means to the user that a wider range of places and spaces is available for a meeting or the like. However, such widening of the range of places and spaces available for a meeting or the like may give rise to problems of (1) security, (2) moral, and (3) management system (system, attendance management). To address these problems, the condition setting portion sets an appropriate condition regarding (1) security, (2) moral, (3) management system (system, attendance management), thereby making it possible to easily select a place where at least one of (1) security, (2) moral compliance, and (3) management system is achieved.

The information processing device may further include a management portion (e.g., the place management unit 102 illustrated in FIG. 5) that manages, when the at least one of the N persons selected by the selection portion use at least one of the M places selected by the selection portion, the at least one of the M places being in use. This feature enables not only the matching, but also total management of the "place" selected by the matching.

### EXPLANATION OF REFERENCE NUMERALS

1: Server
2, 2-1, 2-2, 2-n: User Terminal
3, 3-1, 3-m: Place Terminal
11: CPU
12: ROM
13: RAM
14: Bus
15: Input/Output interface
16: Output Unit
17: Input Unit
18: Storage Unit
19: Communication Unit
20: Drive
30: Removable Medium
101: Matching Unit
102: Place Management Unit
111: User Information Acquisition Unit
112: Place Information Acquisition Unit
113: Condition Setting Unit
114: Selection Unit
115: Presentation Unit
211: Lock Control Unit
212: Minutes Control Unit
213: Environment Control Unit
401: User DB
402: Place DB
403: Minutes DB
P, P1 to P5, Pm: Place
U, U1 to U4, Un: User
O, O1, Om: Owner
W: Network
B1 to B10: Button
F1 to F9: Display Area
A1 to A3: Candidates for Appointment
D1, D2: Setting Bar
J1, J2: Setting knob

## Claims

1. An information processing device comprising:
a selection portion that selects, based on first information regarding each of n persons (where n is an integer equal to or greater than 1) and second information regarding m places (where m is an integer equal to or greater than 1), N persons (where N is an integer equal to or smaller than n) from the n persons, and M places (where M is an integer equal to or smaller than m, and independent from N) that are available to at least one of the N persons.

2. The information processing device according to claim 1, further comprising:
a condition setting portion that sets a condition for selection by the selection portion,
wherein the selection portion selects the N persons and the M places that meet the condition, based on the first information and the second information.

3. The information processing device according to claim 1 or 2, further comprising:
a management portion that manages, when the at least one of the N persons selected by the selection portion use at least one of the M places selected by the selection portion, the at least one of the M places being in use.

4. An information processing method executable by an information processing device, the method comprising:
a selecting step comprising selecting, based on first information regarding each of n persons (where n is an integer equal to or greater than 1) and second information regarding m places (where m is an integer equal to or greater than 1), N persons (where N is an integer equal to or smaller than n) from the n persons, and M places (where M is an integer equal to or smaller than m, and independent from N) that are available to at least one of the N persons.

5. A program for causing a computer to execute a control processing comprsing:
a selecting step comprising selecting, based on first information regarding each of n persons (where n is an integer equal to or greater than 1) and second information regarding m places (where m is an integer equal to or greater than 1), N persons (where N is an integer equal to or smaller than n) from the n persons, and M places (where M is an integer equal to or smaller than m, and independent from N) that are available to at least one of the N persons.
